(19) Europäisches Patentamt
European Patent Office
Office européen des brevets

(11) **EP 3 984 263 B1**

(12) **FASCICULE DE BREVET EUROPEEN**

(45) Date de publication et mention
de la délivrance du brevet:
**07.02.2024   Bulletin 2024/06**

(21) Numéro de dépôt: **20730656.4**

(22) Date de dépôt: **09.06.2020**

(51) Classification Internationale des Brevets (IPC):
**H04W 12/50** *(2021.01)*      **H04W 48/20** *(2009.01)*
**H04W 84/12** *(2009.01)*

(52) Classification Coopérative des Brevets (CPC):
**H04W 48/20; H04W 12/50;** H04W 84/12

(86) Numéro de dépôt international:
**PCT/EP2020/065985**

(87) Numéro de publication internationale:
**WO 2020/249566 (17.12.2020 Gazette 2020/51)**

(54) **PROCEDES ET DISPOSITIFS D'APPAIRAGE DANS UN RESEAU SANS FIL**

VERFAHREN UND VORRICHTUNGEN ZUR PAARUNG IN EINEM DRAHTLOSNETZWERK

METHODS AND DEVICES FOR PAIRING IN A WIRELESS NETWORK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **13.06.2019   FR 1906327**

(43) Date de publication de la demande:
**20.04.2022   Bulletin 2022/16**

(73) Titulaire: **SAGEMCOM BROADBAND SAS
92500 Rueil-Malmaison (FR)**

(72) Inventeur: **LE ROUX, Sylvain
92500 RUEIL MALMAISON (FR)**

(74) Mandataire: **Cabinet Le Guen Maillet
3, impasse de la Vigie
CS 71840
35418 Saint-Malo Cedex (FR)**

(56) Documents cités:
**EP-A1- 3 253 120      WO-A1-2015/154927
US-B1- 7 480 264**

EP 3 984 263 B1

**Description**

DOMAINE TECHNIQUE

L'invention concerne un procédé d'appairage d'un terminal à un point d'accès d'un réseau de communication sans fil comprenant une pluralité de point d'accès.

ETAT DE LA TECHNIQUE ANTERIEURE

Un réseau de communication sans fil (ci-après « réseau ») conforme à l'une des normes IEEE 802.11 comprend typiquement une pluralité de dispositifs électroniques comprenant a minima un module radiofréquence permettant l'établissement de communications conformément à l'une des normes IEEE 802.11, ou dit autrement, conformément à l'une des normes Wi-Fi. Un tel réseau comprend typiquement un dispositif électronique communément appelé point d'accès (« Access Point » en anglais, ou « AP ») et une pluralité de dispositifs électroniques dits terminaux (ou utilisateurs) pouvant établir des connexions sans fil avec le point d'accès et/ou entre eux. Dans un environnement résidentiel, le dispositif électronique point d'accès est typiquement une « box » fournie par un opérateur Internet, c'est-à-dire une passerelle domestique (« home gateway », ou « residential gateway », en anglais). Les terminaux sont typiquement des ordinateurs, télévisions, tablettes ou téléphones dits « intelligents » (« smartphone » en anglais). On dit ainsi communément que les terminaux sont associés « en Wi-Fi » avec le point d'accès. Des systèmes d'extension de couverture de communication sans-fil peuvent être utilisés afin d'augmenter la portée de ces réseaux de communication sans fil en coordonnant plusieurs points d'accès AP (« Access Point » en anglais) répartis. Ces différents points d'accès mettent tous à disposition un même réseau local sans-fil WLAN (« Wireless Local Area Network » en anglais). Dans le cadre de la technologie Wi-Fi (marque déposée), tous ces points d'accès AP utilisent ainsi un même identifiant SSID (« Service Set IDentifier » en anglais) et un même mot de passe (aussi appelé clef de sécurité). Ainsi, l'extension de couverture de communication sans-fil est transparente pour les dispositifs connectés au réseau local sans-fil WLAN.

L'utilisateur d'un terminal souhaitant se connecter à un réseau Wi-Fi doit classiquement renseigner un identifiant SSID du réseau (« Service Set IDentifier » en anglais) et un mot de passe (aussi appelé clef de sécurité). Afin d'améliorer la sécurité de telles connections et notamment permettre l'utilisation de mots de passe complexes, la WFA (« *Wi-Fi Alliance* » en anglais) a défini un protocole dit WPS (« *Wi-Fi Protected Setup* » en anglais) permettant d'associer aisément un nouveau terminal à un réseau Wi-Fi existant. Ce protocole permet à deux équipements (par exemple un ordinateur et un point d'accès) de se connecter l'un à l'autre par exemple lorsqu'un utilisateur appuie sur un bouton physique ou virtuel sur les deux équipements dans un certain délai, par exemple deux minutes. Les deux équipements vont alors se reconnaître et le point d'accès va fournir au terminal l'ensemble des informations nécessaires à sa connexion, notamment le SSID et le mot de passe sans que l'utilisateur n'ait à les fournir.

Le protocole WPS définit également des mécanismes particuliers permettant d'éviter qu'un terminal ne se connecte à un autre réseau Wi-Fi que celui sur lequel il souhaite se connecter dans le cas où une session WPS est en cours sur cet autre réseau Wi-Fi. De même, le protocole WPS définit des mécanismes particuliers permettant d'éviter qu'un terminal étranger ne se connecte sur le réseau Wi-Fi de l'utilisateur. Ces cas sont des cas de recouvrement (« Overlap » en anglais).

A cet effet, il est prévu qu'un point d'accès, dit point d'accès courant, soit à l'écoute des autres sessions WPS en cours sur d'autres points d'accès. Si une session WPS est en cours sur un autre point d'accès, alors le point d'accès courant met un terme à sa propre session WPS. Il est également prévu qu'un terminal scanne l'ensemble des canaux qu'il supporte pour rechercher une session WPS sur un point d'accès. S'il en détecte plusieurs, il doit mettre un terme à sa propre session et avertir l'utilisateur, sauf cas particulier décrit ci-dessous. Le protocole WPS évite ainsi qu'un terminal ne se connecte à un autre réseau que celui prévu parce que cet autre réseau aurait une session WPS en cours au même moment. Le protocole WPS actuel ne permet pas d'avoir plusieurs sessions WPS sur la même bande de fréquences. Toutefois, dans le cas particulier d'un point d'accès multi-bandes (p.ex. 2.4 Ghz et 5 Ghz), il est toléré d'avoir une session WPS en même temps sur chacune des bandes à condition que les deux sessions possèdent le même identifiant UUID (pour «Universally Unique IDentifier » en anglais). Un terminal détectant ces deux sessions ne devrait donc pas mettre un terme à sa propre session.

Définir un unique point d'accès pour répondre aux requêtes de connexion WPS permet d'éviter certains cas de recouvrement. Toutefois, un terminal éloigné de ce point d'accès particulier ne pourra pas se connecter au réseau alors qu'il peut être plus proche spatialement d'un autre point d'accès.

Le document US7480264 divulgue un procédé dans lequel le dispositif d'accès au réseau sélectionne l'un des points d'accès sur la base des charges déterminées ou RSSI des points d'accès et ordonne au point d'accès sélectionné de s'associer à la station sans fil. Le dispositif d'accès au réseau ordonne en outre aux points d'accès restants de rejeter la demande.

Il est alors souhaitable de pallier ces inconvénients de l'état de la technique.

EXPOSE DE L'INVENTION

Un procédé d'appairage d'un terminal à un point d'accès d'un réseau de communication sans fil est décrit. Le réseau comprend une pluralité de points d'accès coordonnés de manière centralisée par un dispositif gestionnaire. Le procédé comprend les étapes suivantes exécutées par au moins un point d'accès :

- recevoir un premier message comprenant une information indiquant que le terminal souhaite s'appairer au point d'accès ;
- envoyer un second message au dispositif gestionnaire, le second message comprenant une information indiquant que le terminal souhaite s'appairer au point d'accès ;
- ajouter dans au moins une trame de balise du point d'accès une information indiquant qu'une session d'appairage est active, uniquement à réception d'un message du dispositif gestionnaire indiquant au point d'accès d'engager une session d'appairage avec le terminal ; et
- appairer le point d'accès et le terminal.

Selon un mode de réalisation, le procédé comprend en outre les étapes suivantes :

- arrêter le procédé dans le cas où le point d'accès détecte une trame de balise d'un autre point d'accès indiquant qu'une session d'appairage est en cours sur cet autre point d'accès ; et
- envoyer un message au dispositif gestionnaire indiquant un recouvrement de sessions d'appairage.

Selon un mode de réalisation, le réseau de communication sans fil est conforme à l'une des normes IEEE 802.11.
Selon un mode de réalisation, la session d'appairage est conforme au protocole WPS. Selon un mode de réalisation, un procédé d'appairage d'un terminal à un point d'accès d'un réseau de communication sans fil est décrit, le réseau comprenant une pluralité de points d'accès coordonnés de manière centralisée par un dispositif gestionnaire. Le procédé comprend les étapes suivantes exécutées par le dispositif gestionnaire :

- recevoir un message d'au moins un point d'accès de la pluralité de points d'accès comprenant une information indiquant que le terminal souhaite s'appairer au point d'accès ;
- sélectionner un unique point d'accès parmi les points d'accès auxquels le terminal souhaite s'appairer ; et
- envoyer un message au point d'accès sélectionné indiquant d'engager une session d'appairage avec le terminal et un message d'arrêt aux points d'accès non sélectionnés. Selon un mode de réalisation, sélectionner un unique point d'accès parmi les points d'accès auxquels le terminal souhaite s'appairer comprend :

  - déterminer une valeur pour chacun desdits points d'accès auxquels ledit terminal souhaite s'appairer, ladite valeur pour un point d'accès donné étant représentative de la capacité dudit point d'accès de mener à son terme l'appairage dudit terminal; et
  - sélectionner le point d'accès ayant une valeur optimale.

Selon un mode de réalisation, la valeur pour un point d'accès donné est égale à l'une des valeurs suivantes :

a) un nombre de demandes d'appairage détectées par ledit point d'accès pour ledit terminal ;
b) une moyenne des indications de puissance de signal reçu des requêtes de sonde contenant lesdites demandes d'appairage détectées ;
c) une combinaison, linéaire ou non, d'au moins deux valeurs parmi a), b).

Un procédé d'appairage d'un terminal à un point d'accès d'un réseau de communication sans fil est décrit, le réseau comprenant une pluralité de points d'accès coordonnés de manière centralisée par un dispositif gestionnaire. Le procédé comprend les étapes suivantes :

- recevoir par au moins un point d'accès un premier message comprenant une information indiquant que le terminal souhaite s'appairer au point d'accès ;
- envoyer par le point d'accès un second message au dispositif gestionnaire, le second message comprenant une information indiquant que le terminal souhaite s'appairer au point d'accès;
- recevoir par le dispositif gestionnaire le second message ;
- sélectionner par le dispositif gestionnaire un unique point d'accès parmi les points d'accès auxquels le terminal souhaite s'appairer ;
- envoyer un troisième message au point d'accès sélectionné lui indiquant d'engager une session d'appairage avec le terminal et un message d'arrêt aux points d'accès non sélectionnés ;
- ajouter dans au moins une trame de balise du point d'accès sélectionné une information indiquant qu'une session d'appairage est active, uniquement à réception par le point d'accès du troisième message ; et
- appairer le point d'accès et le terminal.

Un dispositif point d'accès configuré pour l'appairage d'un terminal d'un réseau de communication sans fil au point d'accès est décrit, le réseau comprenant une pluralité de points d'accès coordonnés de manière centralisée par un dispositif gestionnaire. Le dispositif point d'accès comprend :

- des moyens pour recevoir un premier message comprenant une information indiquant que le terminal souhaite s'appairer au point d'accès;
- des moyens pour envoyer un second message au dispositif gestionnaire, le second message comprenant une information indiquant que le terminal souhaite s'appairer au point d'accès;
- des moyens pour ajouter dans au moins une trame de balise du point d'accès une information indiquant qu'une session d'appairage est active, uniquement à réception d'un message du dispositif gestionnaire indiquant au point d'accès d'engager une session d'appairage avec le terminal ; et
- des moyens pour appairer le point d'accès et le terminal.

Un dispositif gestionnaire configuré pour l'appairage d'un terminal à un point d'accès d'un réseau de communication sans fil est décrit, le réseau comprenant une pluralité de points d'accès coordonnés de manière centralisée par le dispositif gestionnaire. Le dispositif gestionnaire comprend :

- des moyens pour recevoir un message d'au moins un point d'accès de la pluralité de points d'accès comprenant une information indiquant que le terminal souhaite s'appairer au point d'accès ;
- des moyens pour sélectionner un unique point d'accès parmi les points d'accès auxquels le terminal souhaite s'appairer ; et
- des moyens pour envoyer un message au point d'accès sélectionné indiquant d'engager une session d'appairage avec le terminal et un message d'arrêt aux points d'accès non sélectionnés.

Un système d'appairage d'un terminal à un point d'accès d'un réseau de communication sans fil est décrit, le réseau comprenant une pluralité de points d'accès coordonnés de manière centralisée par un dispositif gestionnaire. Le système comprend :

- des moyens, dans au moins un point d'accès, pour recevoir un premier message comprenant une information indiquant que le terminal souhaite s'appairer au point d'accès;
- des moyens, dans le point d'accès, pour envoyer un second message au dispositif gestionnaire, le second message comprenant une information indiquant que le terminal souhaite s'appairer au point d'accès ;
- des moyens, dans le dispositif gestionnaire, pour recevoir le second message ;
- des moyens, dans le dispositif gestionnaire, pour sélectionner un unique point d'accès parmi les points d'accès auxquels le terminal souhaite s'appairer ;
- des moyens, dans le dispositif gestionnaire, pour envoyer un troisième message au point d'accès sélectionné lui indiquant d'engager une session d'appairage avec le terminal et un message d'arrêt aux points d'accès non sélectionnés ;
- des moyens, dans le point d'accès sélectionné, pour ajouter dans au moins une trame de balise une information indiquant qu'une session d'appairage est active, l'information étant ajoutée uniquement à réception par le point d'accès du troisième message ; et
- des moyens d'appairage du point d'accès et du terminal.

Un programme d'ordinateur est également décrit, qui peut être stocké sur un support et/ou téléchargé d'un réseau de communication, afin d'être lu par un dispositif. Ce programme d'ordinateur comprend des instructions pour implémenter le procédé mentionné ci-dessus selon l'une quelconque de ses variantes, lorsque le programme est exécuté par une unité de calcul du dispositif. L'invention concerne également des moyens de stockage comprenant un tel programme d'ordinateur.

## BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] illustre schématiquement un système de communication sans fil dans lequel la présente invention peut être implémentée ;

[Fig. 2] illustre schématiquement l'architecture matérielle d'un dispositif gestionnaire d'un réseau de communication sans fil selon un mode particulier de réalisation ;

[Fig. 3] illustre schématiquement l'architecture matérielle d'un dispositif exécutant d'un réseau de communication sans fil selon un mode particulier de réalisation;

[Fig. 4] illustre schématiquement, côté dispositif gestionnaire, un procédé tel que mis en oeuvre par un dispositif gestionnaire et une pluralité de dispositifs exécutants localisés dans des points d'accès d'un système de communication sans fil comprenant une pluralité de points d'accès ;

[Fig. 5] illustre schématiquement, côté dispositif exécutant, un procédé tel que mis en oeuvre par un dispositif gestionnaire et une pluralité de dispositifs exécutants localisés dans des points d'accès d'un système de communication sans fil comprenant une pluralité de points d'accès ;

[Fig. 6] illustre schématiquement un procédé tel que mis en oeuvre par un dispositif gestionnaire et une pluralité de dispositifs exécutants localisés dans des points d'accès d'un système de communication sans fil comprenant une pluralité de points d'accès selon un premier mode de réalisation ; et

[Fig. 7] illustre schématiquement un procédé tel que mis en oeuvre par un dispositif gestionnaire et une pluralité de dispositifs exécutants localisés dans des points d'accès d'un système de communication sans fil comprenant une pluralité de points d'accès selon un second mode de réalisation.

## EXPOSE DETAILLE DE MODES DE REALISATION

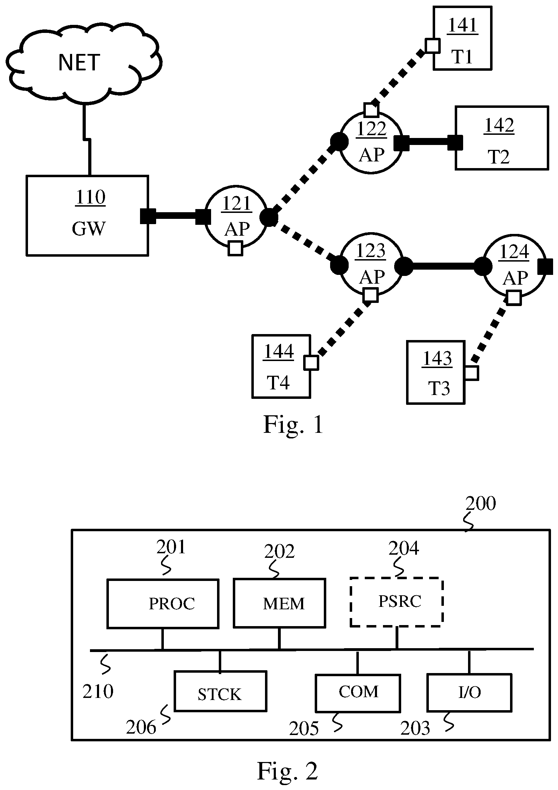

La **Fig. 1** illustre schématiquement un système de communication sans fil dans lequel la présente invention peut être implémentée. Le système de communication comporte un ensemble de points d'accès AP à un réseau local sans-fil WLAN (« Wireless Local Area Network » en anglais) 121, 122, 123 et 124 interconnectés. Les points d'accès AP mettent tous à disposition un même réseau local sans-fil WLAN (même nom...). Dans le cadre de la technologie Wi-Fi, tous ces points d'accès AP utilisent ainsi un même identifiant SSID et un même mot de passe.

Les points d'accès sont interconnectés grâce à des liaisons filaires, par exemple de type Ethernet, ou à des liaisons sans-fil, par exemple une liaison Wi-Fi utilisant un identifiant SSID différent dudit réseau local sans-fil WLAN lui-même. A noter qu'il peut y avoir plusieurs points d'accès dans un même équipement physique (par exemple une passerelle Internet comme la passerelle GW 110, un répéteur Wi-Fi (« extender » en anglais), ou encore un décodeur télévision qui jouerait le rôle d'extendeur du réseau Wi-Fi). Ces points d'accès peuvent opérer dans une même bande de fréquence ou bien sur des bandes différentes.

De manière illustrative, la Fig. 1 montre que l'AP 121 est connecté à l'AP 122 et à l'AP 123 grâce à une liaison sans-fil représentée en pointillés (distincte du réseau local sans-fil WLAN lui-même), et l'AP 124 est connecté à l'AP 123 grâce à une liaison filaire représentée en trait continu.

Le système d'extension de couverture de communication sans-fil permet ainsi d'interconnecter une passerelle GW 110 d'accès à l'Internet, un terminal T1 141, un terminal T2 142, un terminal T3 143 et un terminal T4 144. Le terminal T1 141 est par exemple un téléphone intelligent (« smartphone » en anglais) connecté par une liaison sans-fil à l'AP 122, c'est-à-dire que le terminal T1 141 est ainsi connecté via le réseau local sans-fil WLAN grâce au point d'accès AP 122. Le terminal T2 142 est par exemple un PC connecté par une liaison filaire à l'AP 122. Le terminal T3 143 est par exemple une tablette connectée par une liaison sans-fil à l'AP 124, c'est-à-dire que le terminal T3 143 est ainsi connecté via le réseau local sans-fil WLAN grâce au point d'accès AP 124. Le terminal T4 144 est par exemple une unité de stockage en réseau NAS (« Network Attached Storage » en anglais) connecté par une liaison sans-fil à l'AP 123, c'est-à-dire que le terminal T4 144 est ainsi connecté via le réseau local sans-fil WLAN grâce au point d'accès AP 123.

Dans un tel système, chaque point d'accès du réseau héberge un dispositif exécutant et les points d'accès sont coordonnés de manière centralisée par un dispositif gestionnaire. A un instant donné, il y a un unique dispositif gestionnaire dans l'ensemble du réseau. Le dispositif gestionnaire peut être hébergé par un des APs du réseau ou bien par un autre dispositif non représenté sur la Fig. 1 (par exemple un serveur). Le dispositif gestionnaire peut être désigné par configuration figée ou dynamiquement par élection. Le dispositif gestionnaire est par exemple l'AP qui est au plus près de la passerelle GW 110 d'accès à l'Internet, à savoir l'AP 121 dans le contexte de la Fig. 1. Si plusieurs dispositifs gestionnaires sont disponibles, un seul doit être choisi et actif parmi eux. Le dispositif gestionnaire actif peut par exemple être sélectionné à partir des numéros de séries des dispositifs gestionnaires disponibles. Dans un mode particulier de réalisation, le dispositif gestionnaire ayant le plus petit numéro de série est choisi comme gestionnaire actif. Dans une variante, le dispositif gestionnaire actif est sélectionné par un utilisateur via une interface homme-machine.

Le dispositif gestionnaire communique avec les dispositifs exécutants par l'intermédiaire d'un bus de communication. Le bus ISM décrit dans la demande de brevet EP2791798 est un exemple d'un tel bus de communication. En effet, le dispositif gestionnaire a besoin de connaître les dispositifs exécutants présents sur le réseau. Les dispositifs exécutants ne communiquent pas entre eux.

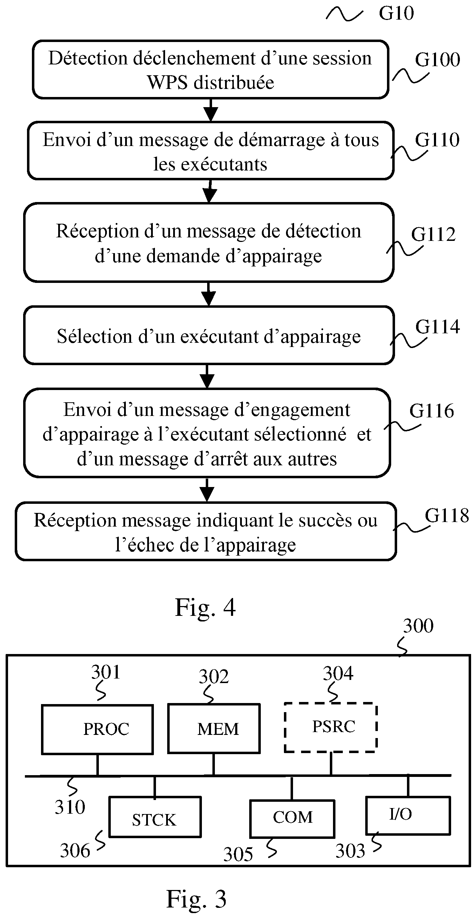

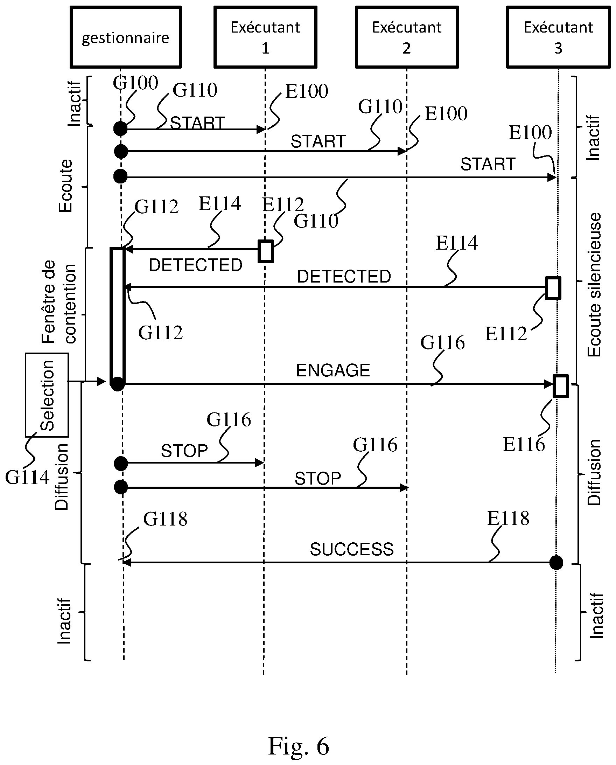

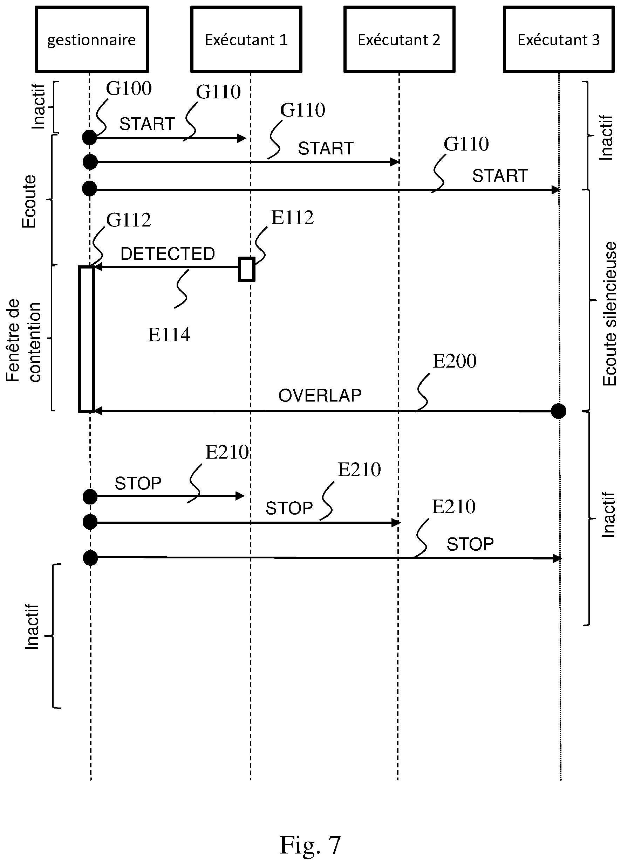

La **Fig. 2** illustre schématiquement l'architecture matérielle d'un dispositif gestionnaire d'un réseau de communication sans fil, le dispositif gestionnaire pouvant être hébergé par un point d'accès, et étant configuré pour exécuter tout ou partie des étapes du procédé G10 illustré dans la Fig. 4, dans la Fig.6 ou dans la Fig. 7.

Ainsi, le dispositif gestionnaire 200 comprend un ou plusieurs processeur(s) 201, par exemple un CPU (« *Central Processing Unit* » en anglais), un GPU (« *Graphical Processing Unit* » en anglais) et/ou un DSP (« *Digital Signal Processor* » en anglais). Le dispositif gestionnaire 200 comprend également une mémoire MEM 202 de type RAM (« *Random Access Memory* » en anglais), ROM (« *Read Only Memory* » en anglais) et/ou EPROM (« *Erasable Programmable Read Only Memory* » en anglais). Le dispositif gestionnaire 200 peut optionnellement comprendre une ou plusieurs interfaces d'entrée/sortie 203 (par exemple un clavier, une souris, un pavé tactile (« *touchpad* » en anglais, une webcam, etc.), chacune étant configurée pour afficher des informations et/ou permettre à un utilisateur de rentrer des commandes ou des données. Le dispositif gestionnaire 200 peut également comprendre une source d'énergie 204 qui peut également être externe au dispositif gestionnaire. Le dispositif gestionnaire 200 peut également comprendre une ou plusieurs interface(s) de communication 205. L'interface de communication permet typiquement la connexion du dispositif gestionnaire 200 à un réseau local et/ou Internet. Le dispositif gestionnaire 200 peut également comprendre un module de stockage STCK 206 qui peut être de type support magnétique, mémoire flash, disque optique, disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais). Ces différents éléments sont reliés entre eux par un bus de communication 210.

Le processeur CPU 201 peut enregistrer des données, ou informations, dans la mémoire MEM 202 ou dans le module de stockage STCK 206. Le processeur CPU 201 peut lire des données enregistrées dans la mémoire MEM 202 ou dans le module de stockage STCK 206. Ces données peuvent correspondre à des paramètres de configuration.

Le processeur CPU 201 est capable d'exécuter des instructions chargées dans la mémoire MEM 202, par exemple à partir du module de stockage STCK 206. Lorsque le dispositif gestionnaire 200 est mis sous tension, le processeur CPU 201 est capable de lire de la mémoire MEM 202 des instructions et de les exécuter. Ces instructions forment un programme d'ordinateur causant la mise en oeuvre, par le processeur CPU 201, de tout ou partie des procédés et étapes décrits ci-après, particulièrement le procédé décrit dans la Fig. 4, dans la Fig. 6 ou la Fig. 7. Ainsi, tout ou partie des procédés et étapes décrits ci-après peut être implémenté sous forme logicielle par exécution d'un ensemble d'instructions par une machine programmable telle qu'un DSP (« *Digital Signal Processor* » en anglais) ou un microcontrôleur. Tout ou partie des procédés et étapes décrits ici peut aussi être implémenté sous forme matérielle par une machine ou un composant dédié tels qu'un FPGA (« *Field-Programmable Gate Array* » en anglais) ou un ASIC (« *Application-Specific Integrated Circuit* » en anglais).

Selon une variante, le programme d'ordinateur est stocké à l'extérieur du dispositif gestionnaire 200 sur un support non-transitoire de données numériques (« non-transitory digital data support » en anglais), par exemple un support externe tel qu'un HDD, CD-ROM, DVD, un dispositif de stockage de type USB. Le dispositif gestionnaire 200 peut donc être configuré pour lire un programme d'ordinateur.

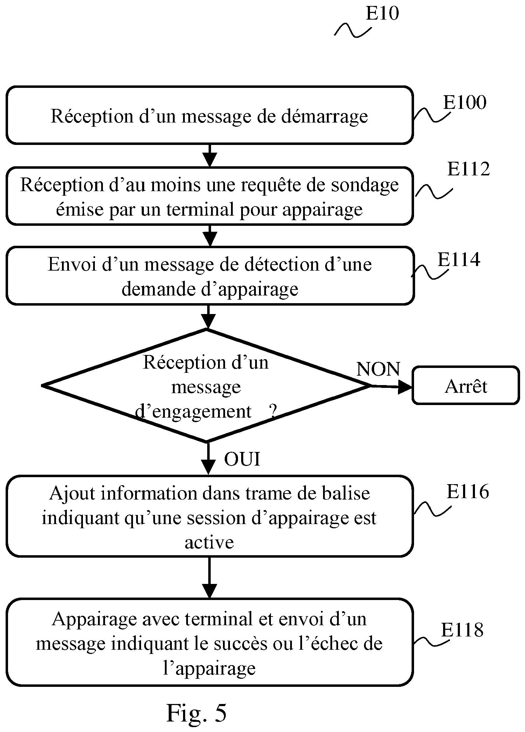

La **Fig. 3** illustre schématiquement l'architecture matérielle d'un dispositif exécutant 300 d'un réseau de communication sans fil, le dispositif exécutant étant hébergé par un point d'accès, et étant configuré pour exécuter tout ou partie des étapes du procédé E10 illustré dans la Fig. 5, dans la Fig. 6 ou dans la Fig. 7.

Ainsi, le dispositif exécutant 300 comprend un ou plusieurs processeur(s) 301, par exemple un CPU (« Central Processing Unit » en anglais), un GPU (« Graphical Processing Unit » en anglais) et/ou un DSP (« Digital Signal Processor » en anglais). Le dispositif exécutant 300 comprend également une mémoire MEM 302 de type RAM (« Random Access Memory » en anglais), ROM (« Read Only Memory » en anglais) et/ou EPROM (« Erasable Programmable Read Only Memory » en anglais). Le dispositif exécutant 300 peut comprendre optionnellement une ou plusieurs interface(s) d'entrée/sortie 303 (par exemple un clavier, une souris, un touchpad, une webcam, etc), chacune étant configurée pour afficher des informations et/ou permettre à un utilisateur de rentrer des commandes ou des données. Le dispositif exécutant 300 peut également comprendre une source d'énergie 304 qui peut également être externe au dispositif exécutant. Le dispositif exécutant 300 peut également comprendre une ou plusieurs interface(s) de communication 305. L'interface de communication permet typiquement la connexion du dispositif exécutant 300 à un réseau local et/ou Internet. Le dispositif exécutant 300 peut également comprendre un module de stockage STCK 304 qui peut être de type support magnétique, mémoire flash, disque optique, disque dur HDD (« Hard Disk Drive » en anglais) ou SSD (« Solid-State Drive » en anglais), ou de type lecteur de support de stockage externe, tel un lecteur de cartes SD (« Secure Digital » en anglais). Ces différents éléments sont reliés entre eux par un bus de communication 310.

Le processeur CPU 301 peut enregistrer des données, ou informations, dans la mémoire MEM 302 ou dans le module de stockage STCK 304. Le processeur CPU 301 peut lire des données enregistrées dans la mémoire MEM 302 ou dans le module de stockage STCK 304. Ces données peuvent correspondre à des paramètres de configuration.

Le processeur CPU 301 est capable d'exécuter des instructions chargées dans la mémoire MEM 302, par exemple à partir du module de stockage STCK 304. Lorsque le dispositif exécutant 300 est mis sous tension, le processeur CPU 301 est capable de lire de la mémoire MEM 302 des instructions et de les exécuter. Ces instructions forment un programme d'ordinateur causant la mise en oeuvre, par le processeur CPU 301, de tout ou partie des procédés et étapes décrits ci-après, particulièrement le procédé décrit dans la Fig. 4, dans la Fig. 6 ou la Fig. 7. Ainsi, tout ou partie des procédés et étapes décrits ci-après peut être implémenté sous forme logicielle par exécution d'un ensemble d'instructions par une machine programmable telle qu'un DSP (« Digital Signal Processor » en anglais) ou un microcontrôleur. Tout ou partie des procédés et étapes décrits ici peut aussi être implémenté sous forme matérielle par une machine ou un composant dédié tels qu'un FPGA (« Field-Programmable Gate Array » en anglais) ou un ASIC (« Application-Specific Integrated Circuit » en anglais).

Selon une variante, le programme d'ordinateur est stocké à l'extérieur du dispositif exécutant 300 sur un support non-transitoire de données numériques (« non-transitory digital data support » en anglais), par exemple un support externe tel qu'un HDD, CD-ROM, DVD, un dispositif de stockage de type USB. Le dispositif exécutant 300 peut donc être configuré pour lire un programme d'ordinateur.

A noter que le dispositif gestionnaire 200 et le dispositif exécutant 300 peuvent être situés dans un même dispositif matériel ou bien dans des dispositifs matériels différents. Un même équipement physique peut donc héberger à la fois le dispositif gestionnaire et un ou plusieurs dispositifs) exécutant(s).

Les figures 4, 5 et 6 illustrent schématiquement un procédé tel que mis en oeuvre par un dispositif gestionnaire et une pluralité de dispositifs exécutants localisés dans des points d'accès d'un système de communication sans fil comprenant une pluralité de points d'accès. Dans un mode particulier de réalisation, le système de communication sans fil est un réseau Wi-Fi. Plus particulièrement, la **Fig. 4** illustre le procédé du point de vue du dispositif gestionnaire (étapes G100 à G118) et la **Fig. 5** illustre le procédé du point de vue du dispositif exécutant dans un point d'accès (étapes E100 à E118). La **Fig. 6** illustre le procédé mis en oeuvre par le système dispositif gestionnaire/dispositif(s) exécutant(s) et reprend l'ensemble des étapes G100 à G118 et E100 à E118. Dans la suite le dispositif gestionnaire est appelé gestionnaire et le dispositif exécutant est appelé exécutant.

Le gestionnaire peut se trouver dans 4 modes différents : inactif, à l'écoute, diffusion et fenêtre de contention.

Un exécutant, localisé dans un point d'accès, peut se trouver dans 3 modes différents : inactif, à l'écoute, et diffusion. Dans la suite du document, les termes dispositif exécutant ou point d'accès sont utilisés de manière interchangeable.

Lors d'une étape G100, le gestionnaire détecte le déclenchement par un utilisateur d'une session WPS, dite session WPS distribuée. Le déclenchement d'une telle session se fait par exemple par appui sur un bouton physique d'un des points d'accès du système. Selon une variante, le déclenchement d'une telle session se fait par appui sur un bouton virtuel d'une interface homme machine associée à l'un des points d'accès du système. Plus précisément, l'appui sur le bouton (physique ou virtuel) d'un des points d'accès du système déclenche une session WPS distribuée si aucune n'est en cours et arrête la session WPS distribuée si celle-ci est déjà en cours. En effet, à tout moment, l'utilisateur peut interrompre une session WPS en cours par appui sur le bouton.

Dès lors, si le gestionnaire est dans le mode inactif, alors il interprète l'appui sur le bouton comme étant une demande de déclenchement d'une session WPS, il passe alors en mode écoute et passe à l'étape G110. Si au contraire le gestionnaire est dans un autre mode que le mode inactif, il interprète l'appui sur le bouton comme étant une demande d'arrêt de la session WPS distribuée en cours. Dans ce cas, il envoie un message d'arrêt (message STOP) à l'ensemble des exécutants.

Lors d'une étape G110, le gestionnaire envoie un message (message START) à chacun des points d'accès du réseau, i.e. à chacun des dispositifs exécutant, indiquant le déclenchement d'une session WPS par l'utilisateur. Il démarre également un compte à rebours afin de limiter temporellement la session WPS déclenchée à l'étape G100. La durée de ce compte à rebours est définie à l'avance. Dans un mode particulier de réalisation sa durée T1 est de 120 secondes.

Lors d'une étape E100, l'exécutant reçoit le message START. S'il est dans le mode inactif, il passe dans le mode écoute silencieuse comme illustré sur la Fig. 6. S'il est dans un autre mode que le mode inactif, alors l'exécutant ignore le message START.

Lors d'une étape E112, pendant la phase d'écoute silencieuse, l'exécutant est à l'écoute des demandes d'appairage émises par un terminal du réseau de communication sans fil. A cet effet, l'exécutant cherche dans les requêtes de sondage (« probe request » en anglais) émises par le terminal et reçues par lui, une information IE (« Information Element » en anglais) indiquant que le terminal souhaite s'appairer via WPS au point d'accès (« WPS pairing » en anglais).

Lors d'une étape E114, dans le cas où il a reçu une requête de sondage avec une information indiquant que le terminal souhaite s'appairer via WPS au point d'accès, l'exécutant envoie au gestionnaire un message de détection (message DETECTED) l'informant de cette demande. Ce message comprend les informations suivantes : la date à laquelle la requête de sondage a été reçue à E112, un identifiant du terminal (BSSID ou « Basic Service Set IDentifier »), une indication de la puissance du signal émis par le terminal et reçu par le point d'accès (RSSI ou « Received Signal Strength Indication» en anglais).

Lors d'une étape G112, le gestionnaire reçoit un ou plusieurs messages DETECTED provenant d'un ou plusieurs points d'accès. Si le gestionnaire est en mode écoute lorsqu'il reçoit un premier message DETECTED, il passe en mode fenêtre de contention pour une certaine durée T2. A cet effet, le gestionnaire peut démarrer un compte à rebours dont la durée est égale à T2. Par exemple, T2=5 secondes. Dans le cas où le gestionnaire reçoit un message DETECTED alors qu'il est déjà en mode fenêtre de contention, alors il enregistre ce message pour une utilisation ultérieure. Le gestionnaire enregistre tous les messages DETECTED reçus pendant qu'il est dans le mode fenêtre de contention, i.e. pendant que le délai T2 n'est pas écoulé. La fenêtre de contention correspond donc à la période pendant laquelle le gestionnaire se donne la possibilité de voir s'il existe d'autres candidats, i.e. d'autres exécutants, pour l'appairage avec un terminal.

Lors d'une étape G114, le gestionnaire sélectionne, pour un terminal donné, un exécutant, appelé exécutant d'appairage, parmi tous ceux qui ont envoyé un message DETECTED pour ledit terminal.

Dans le cas particulier où le gestionnaire a reçu à l'étape G112, un ou plusieurs messages DETECTED d'un unique exécutant, ce dernier est sélectionné comme exécutant d'appairage.

Dans le cas où le gestionnaire a reçu à l'étape G112, un ou plusieurs messages DETECTED de plusieurs dispositifs exécutants (K dispositifs) concernant un même terminal, le gestionnaire sélectionne l'un d'entre eux. Dans un mode particulier de réalisation, une valeur est déterminée pour chaque point d'accès. Cette valeur est représentative de la capacité dudit point d'accès de mener à terme l'appairage dudit terminal.

Cette valeur pour un point d'accès donné est par exemple égale à:

    a) un nombre de demandes d'appairage détectées par ledit point d'accès pour ledit terminal ;
    b) une moyenne des indications de puissance de signal reçu des requêtes de sonde contenant lesdites demandes d'appairage détectées ;
    c) un retard de la première demande d'appairage détectée par ledit point d'accès par rapport à la première demande d'appairage détectée sur l'ensemble desdits points d'accès ;
    d) une combinaison d'au moins deux valeurs parmi a), b) et c).

Le gestionnaire sélectionne comme exécutant d'appairage le dispositif ayant une valeur optimale, par exemple un nombre de demandes d'appairage détectées le plus élevé, une moyenne des indications de puissance de signal reçu le plus élevé, ou un retard de la première demande d'appairage détectée le plus petit.

Dans un mode particulier de réalisation, cette valeur est par exemple une combinaison, linéaire ou non, de plusieurs valeurs, par exemple un retard de détection par rapport à une première détection, i.e. par rapport au premier message DETECTED reçu, le RSSI et un nombre de messages DETECTED envoyés par cet exécutant pour le terminal en question et éventuellement un taux d'occupation. Pour chaque exécutant i ayant envoyé un message DETECTED lors d'une étape E114, on note Ti la date (par exemple définie en millisecondes) de détection de la première demande d'appairage, $RSSI_i$ le RSSI moyen des requêtes de sonde contenant ces demandes d'appairage et Ni le nombre de demandes d'appairage détectées.

La valeur $S_i$ pour un exécutant d'indice i est par exemple égale à $(T_i - \min_{\forall\, k\, \in[0;K]} T_k)/500 - RSSI_i - N_i$ ,

$\min_{\forall\, k\, \in[0;K]} T_k$ est la valeur la plus petite des $T_k$ sur l'ensemble des K dispositifs exécutants.

Le gestionnaire sélectionne comme exécutant d'appairage le dispositif ayant la valeur la plus petite.

Dans une variante de réalisation, la valeur Si pour un exécutant d'indice i est par exemple égale à :

$$S_i = \alpha * (T_i - \min_{\forall\, k\, \in[0;K]} T_k) + \beta * RSSI_i + \tau_i + B_i$$

où :

- $\tau_i$ est le taux d'occupation de l' exécutant d'indice i ;
- $B_i$ est une valeur bonus spécifique à l'exécutant d'indice i, qui dépend par exemple de la bande de fréquence (2.4GHz, 5GHz, 6GHz) utilisée par cet exécutant ; et
- $\alpha$, $\beta$, $\delta$ et $\mu$ sont des constantes.

Par exemple, $\alpha$ = 0,02, $\beta$ = -1, $\delta$ = 2, $\mu$ = 10, Bi = 5 pour la bande 2.4GHz, 2 pour la bande 5GHz et 0 pour la bande 6GHz.

Le taux d'occupation de l'exécutant d'indice i est par exemple défini par la formule suivante : $\tau_i = \delta * N_i + \mu *$

$(1 - TXOP_i)$. La valeur $TXOP_i$ est la proportion de temps d'émission disponible, c'est-à-dire la proportion du temps pendant lequel l'exécutant i peut émettre s'il avait du trafic à transmettre. Cette valeur est déterminée en rapportant le temps d'émission disponible à la durée totale de la période de mesure. C'est donc une valeur qui varie entre 0 et 1, 0 signifiant qu'il n'est pas possible de transmettre plus et 1 que l'intégralité du temps est disponible.

Dans le cas où le gestionnaire a reçu à l'étape G112, un ou plusieurs messages DETECTED de plusieurs dispositifs exécutants concernant des terminaux différents, il ne peut pas faire de sélection. Cette situation est considérée comme un cas de recouvrement (« overlap » en anglais). Dans ce cas particulier, le gestionnaire envoie un message d'arrêt (message STOP) à l'ensemble des dispositifs exécutants et retourne dans l'état inactif. Lors d'une étape G116, le gestionnaire envoie un message ENGAGE à l'exécutant sélectionné à l'étape G114 et un message d'arrêt STOP aux autres dispositifs exécutant, i.e. ceux non sélectionnés à l'étape G114. Le message ENGAGE indique au dispositif d'exécution sélectionné d'engager une session d'appairage avec ledit terminal.

Lors d'une étape E116, l'exécutant sélectionné à l'étape G114 reçoit le message ENGAGE et le point d'accès ajoute dans au moins une trame de balise (« beacon frame » en anglais) une information (IE) indiquant qu'une session d'appairage est active. Cet ajout est effectué uniquement à réception du message ENGAGE du gestionnaire indiquant au point d'accès d'engager une session d'appairage avec le terminal. Autrement dit un exécutant n'ajoute pas dans ses trames de balise une information (IE) indiquant qu'une session d'appairage est active pendant la phase d'écoute silencieuse. L'absence de cette information dans les trames de balise diffusées par le point d'accès lors des étapes E112, E114, G112, G114 et G116 rend impossible la détection d'une situation de recouvrement par un autre point d'accès ou par un terminal.

En effet, dans le cas d'une session WPS classique, un cas de recouvrement serait détecté par un terminal lors de la réception d'au moins deux trames de balise en provenance de deux points d'accès différents et contenant toutes les deux une information (IE) indiquant qu'une session d'appairage WPS est en cours.

Lors d'une étape E118, l'exécutant sélectionné va donc permettre au terminal de rejoindre le réseau comme lors d'une session WPS classique. Si le terminal rejoint le réseau, alors l'exécutant envoie un message SUCCESS au gestionnaire l'informant du succès de l'appairage et retourne dans le mode inactif. Si l'appairage du terminal échoue, l'exécutant envoie un message FAILURE au gestionnaire l'informant de l'échec de l'appairage et retourne dans le mode inactif.

Lors d'une étape G118, le gestionnaire reçoit un message de l'exécutant d'appairage indiquant le succès ou l'échec de l'appairage. Il envoie alors un message d'arrêt (message STOP) à tous les exécutants et retourne dans le mode inactif.

A tout moment, l'utilisateur peut interrompre une session WPS en cours, par exemple par appui sur un bouton physique ou virtuel d'une interface homme machine. Dans ce cas le gestionnaire qui est dans un autre mode que le mode inactif passe dans le mode inactif. Il envoie alors un message d'arrêt à l'ensemble des dispositifs exécutants (message STOP). Il peut également être mis fin à une session WPS lorsque le premier compte à rebours (démarré lors de l'entrée du gestionnaire dans le mode écoute) T1 est écoulé. Dans ce cas le gestionnaire retourne dans le mode inactif et envoie un message d'arrêt (message STOP) à tous les exécutants.

Sur réception d'un message d'arrêt, un exécutant retourne dans le mode inactif et envoie un message d'échec (message FAILURE) au gestionnaire. Il arrête les éventuels comptes à rebours qu'il a démarrés lorsqu'il était dans un mode d'écoute silencieuse. Dans le cas particulier où un appairage est en cours avec un terminal, il termine l'appairage avant de retourner dans le mode inactif.

Sur détection d'un cas de recouvrement, un exécutant doit retourner dans l'état inactif, envoyer au gestionnaire un message de recouvrement (message OVERLAP) pour l'informer dudit recouvrement et arrêter ses éventuels comptes à rebours. Dans le cas particulier où un appairage est en cours avec un terminal, il met un terme à cet appairage avant de retourner dans l'état inactif.

Afin d'informer l'utilisateur de l'avancement de la session WPS, les messages suivants peuvent être affichés par le gestionnaire et/ou un exécutant :

- Démarrage d'une session WPS
- Détection d'un recouvrement
- Succès de l'appairage du terminal avec un point d'accès du réseau
- Echec de l'appairage du terminal avec un point d'accès du réseau

Dans une variante, les messages sont affichés à l'aide de diodes électro-luminescentes.

Le procédé selon l'invention permet avantageusement à un terminal de se connecter à un réseau donné comportant plusieurs points d'accès situés ou non dans la même bande de fréquence tout en conservant la simplicité d'utilisation du protocole WPS. Démarrer une session WPS sur ces différents points d'accès est dès lors possible. Cette solution est particulièrement intéressante dans le cas où plusieurs points d'accès appartiennent au même réseau et sont situés dans la même bande de fréquence comme cela est le cas pour les systèmes d'extension de couverture de communication sans-fil (« extenders » en anglais).

Dans un mode de réalisation particulier illustré par la **Fig.7,** afin de ne pas perturber d'autres dispositifs (par exemple exécutant 1 dans la Fig. 7) qui engageraient une session WPS classique à proximité, les points d'accès du réseau recherchent également une information (IE) indiquant qu'une session d'appairage WPS est active dans les trames de balise qu'ils reçoivent d'autres points d'accès situés à proximité. Sur cette figure, les étapes identiques à celles de la Fig.6 sont identifiées avec les mêmes références numériques. Si un exécutant dans le mode écoute silencieuse ou diffusion (par exemple l'exécutant 3 dans la Fig. 7) détecte une trame de balise émise par un point d'accès (par exemple l'exécutant 1) indiquant qu'une session d'appairage WPS est active pour ce point d'accès, il repasse en mode inactif et informe le gestionnaire d'un recouvrement par l'envoi d'un message OVERLAP lors d'une étape E200. Sur réception du message de recouvrement, le gestionnaire retourne en mode inactif et envoie un message d'arrêt à tous les exécutants lors d'une étape E210.

## Revendications

**1.** Un procédé d'appairage d'un terminal à un point d'accès d'un réseau de communication sans fil, ledit réseau comprenant une pluralité de points d'accès coordonnés de manière centralisée par un dispositif gestionnaire, ledit procédé comprenant les étapes suivantes exécutées par ledit dispositif gestionnaire :

- recevoir (G112) un message d'au moins un point d'accès de ladite pluralité de points d'accès comprenant une information indiquant que ledit terminal souhaite s'appairer audit point d'accès ;
- déterminer (G114) une valeur pour chacun desdits points d'accès auxquels ledit terminal souhaite s'appairer, ladite valeur pour un point d'accès donné étant représentative de la capacité dudit point d'accès de mener à terme l'appairage dudit terminal ;
- sélectionner (G114) le point d'accès ayant une valeur optimale ;
- envoyer (G116) un message audit point d'accès sélectionné indiquant d'engager une session d'appairage avec ledit terminal et un message d'arrêt aux points d'accès non sélectionnés,

ledit procédé étant **caractérisé en ce que** ladite valeur pour un point d'accès donné est fonction du retard de la première demande d'appairage détectée par ledit point d'accès par rapport à la première demande d'appairage détectée sur l'ensemble desdits points d'accès.

**2.** Le procédé selon la revendication 1, dans lequel ladite valeur pour un point d'accès donné est égale à une combinaison du retard de la première demande d'appairage détectée par ledit point d'accès par rapport à la première demande d'appairage détectée sur l'ensemble desdits points d'accès et d'au moins une des valeurs suivantes :

a) un nombre $N_i$ de demandes d'appairage détectées par ledit point d'accès pour ledit terminal ou un taux d'occupation dudit point d'accès ;
b) une moyenne $RSSI_i$ des indications de puissance de signal reçu des requêtes de sonde contenant lesdites demandes d'appairage détectées.

**3.** Le procédé selon la revendication 2, dans lequel ladite valeur pour un point d'accès donné d'index i est égale à :

$(T_i - \min_{\forall\, k\, \in [0;K]} T_k)/500 - RSSI_i - N_i$ où Ti est une date de détection d'une première demande d'appairage et

$\min_{\forall\, k\, \in [0;K]} T_k$ est la valeur la plus petite des $T_k$ sur l'ensemble des points d'accès.

**4.** Le procédé selon la revendication 2, dans lequel ladite valeur pour un point d'accès donné d'index i est égale à :

$$S_i = \alpha * (T_i - \min_{\forall\, k\, \in [0;K]} T_k) + \beta * RSSI_i + \tau_i + B_i$$

où :

- $\tau_i$ est le taux d'occupation du point d'accès d'indice i ;
- Ti est une date de détection d'une première demande d'appairage ;

$$\min_{\forall\, k \in [0;K]} T_k$$

- $\min_{\forall\, k \in [0;K]} T_k$ est la valeur la plus petite des $T_k$ sur l'ensemble des points d'accès ;
- $B_i$ est une valeur bonus spécifique au point d'accès d'indice i qui dépend de la bande de fréquence utilisée par ce point d'accès ; et
- $\alpha$ et $\beta$ sont des constantes.

5. Un procédé d'appairage d'un terminal à un point d'accès d'un réseau de communication sans fil, ledit réseau comprenant une pluralité de points d'accès coordonnés de manière centralisée par un dispositif gestionnaire, ledit procédé comprenant les étapes suivantes :

- recevoir (E112) par au moins un point d'accès un premier message comprenant une information indiquant que ledit terminal souhaite s'appairer audit point d'accès ;
- envoyer (E114) par ledit point d'accès un second message audit dispositif gestionnaire, ledit second message comprenant une information indiquant que ledit terminal souhaite s'appairer audit point d'accès ;
- recevoir (G112) par le dispositif gestionnaire ledit second message ;
- déterminer (G114) une valeur pour chacun desdits points d'accès auxquels ledit terminal souhaite s'appairer, ladite valeur pour un point d'accès donné étant représentative de la capacité dudit point d'accès de mener à terme l'appairage dudit terminal ; et
- sélectionner (G114) le point d'accès ayant une valeur optimale;- envoyer (G116) un troisième message audit point d'accès sélectionné lui indiquant d'engager une session d'appairage avec ledit terminal et un message d'arrêt aux points d'accès non sélectionnés ;
- ajouter (E116) dans au moins une trame de balise dudit point d'accès sélectionné une information indiquant qu'une session d'appairage est active, uniquement à réception par ledit point d'accès dudit troisième message ; et
- appairer (E118) ledit point d'accès et ledit terminal,

ledit procédé étant **caractérisé en ce que** ladite valeur pour un point d'accès donné est fonction du retard de la première demande d'appairage détectée par ledit point d'accès par rapport à la première demande d'appairage détectée sur l'ensemble desdits points d'accès.

6. Le procédé selon la revendication 5, dans lequel ladite valeur pour un point d'accès donné est égale à une combinaison du retard de la première demande d'appairage détectée par ledit point d'accès par rapport à la première demande d'appairage détectée sur l'ensemble desdits points d'accès et d'au moins une des valeurs suivantes :

a) un nombre Ni de demandes d'appairage détectées par ledit point d'accès pour ledit terminal ou un taux d'occupation dudit point d'accès ;
b) une moyenne $RSSI_i$ des indications de puissance de signal reçu des requêtes de sonde contenant lesdites demandes d'appairage détectées.

7. Le procédé selon la revendication 6, dans lequel ladite valeur pour un point d'accès donné d'index i est égale à :

$(T_i - \min_{\forall\, k \in [0;K]} T_k)/500\text{-RSSI}_i\text{-N}_i$ où Ti est une date de détection d'une première demande d'appairage et

$\min_{\forall\, k \in [0;K]} T_k$ est la valeur la plus petite des $T_k$ sur l'ensemble des points d'accès.

8. Le procédé selon la revendication 6, dans lequel ladite valeur pour un point d'accès donné d'index i est égale à :

$$S_i = \alpha * (T_i - \min_{\forall\, k \in [0;K]} T_k) + \beta * RSSI_i + \tau_i + B_i$$

où :

- $\tau_i$ est le taux d'occupation du point d'accès d'indice i ;Ti est une date de détection d'une première demande d'appairage ;

- $\min\limits_{\forall k \in [0;K]} T_k$ est la valeur la plus petite des $T_k$ sur l'ensemble des points d'accès ;
- $B_i$ est une valeur bonus spécifique au point d'accès d'indice i qui dépend de la bande de fréquence utilisée par ce point d'accès ; et
- $\alpha$ et $\beta$ sont des constantes.

9. Un dispositif gestionnaire configuré pour l'appairage d'un terminal à un point d'accès d'un réseau de communication sans fil, ledit réseau comprenant une pluralité de points d'accès coordonnés de manière centralisée par ledit dispositif gestionnaire, ledit dispositif gestionnaire comprenant :

- des moyens pour recevoir un message d'au moins un point d'accès de ladite pluralité de points d'accès comprenant une information indiquant que ledit terminal souhaite s'appairer audit point d'accès ;
- des moyens de détermination pour déterminer une valeur pour chacun desdits points d'accès auxquels ledit terminal souhaite s'appairer, ladite valeur pour un point d'accès donné étant représentative de la capacité dudit point d'accès de mener à terme l'appairage dudit terminal ;
- des moyens pour sélectionner le point d'accès ayant une valeur optimale ; et
- des moyens pour envoyer un message audit point d'accès sélectionné indiquant d'engager une session d'appairage avec ledit terminal et un message d'arrêt aux points d'accès non sélectionnés,

ledit dispositif étant **caractérisé en ce que** lesdits moyens de détermination sont configurés pour déterminer ladite valeur pour un point d'accès donné en fonction du retard de la première demande d'appairage détectée par ledit point d'accès par rapport à la première demande d'appairage détectée sur l'ensemble desdits points d'accès.

10. Le dispositif selon la revendication 9, dans lequel lesdits moyens de détermination sont configurés pour déterminer une combinaison du retard de la première demande d'appairage détectée par ledit point d'accès par rapport à la première demande d'appairage détectée sur l'ensemble desdits points d'accès et d'au moins une des valeurs suivantes :

a) un nombre Ni de demandes d'appairage détectées par ledit point d'accès pour ledit terminal ou un taux d'occupation dudit point d'accès;
b) une moyenne RSSI$_i$ des indications de puissance de signal reçu des requêtes de sonde contenant lesdites demandes d'appairage détectées ;

ladite valeur pour un point d'accès donné étant égale à ladite combinaison.

11. Le dispositif selon la revendication 10, dans lequel ladite valeur pour un point d'accès donné d'index i est égale à :

$$(T_i - \min\limits_{\forall k \in [0;K]} T_k)/500 \text{-RSSI}_i\text{-N}_i$$ où Ti est une date de détection d'une première demande d'appairage et

$\min\limits_{\forall k \in [0;K]} T_k$ est la valeur la plus petite des $T_k$ sur l'ensemble des points d'accès.

12. Le dispositif selon la revendication 10, dans lequel ladite valeur pour un point d'accès donné d'index i est égale à :

$$S_i = \alpha * (T_i - \min\limits_{\forall k \in [0;K]} T_k) + \beta * RSSI_i + \tau_i + B_i$$

où :

- $\tau_i$ est le taux d'occupation du point d'accès d'indice i ;
- Ti est une date de détection d'une première demande d'appairage ;
- $\min\limits_{\forall k \in [0;K]} T_k$ est la valeur la plus petite des $T_k$ sur l'ensemble des points d'accès ;
- $B_i$ est une valeur bonus spécifique au point d'accès d'indice i qui dépend de la bande de fréquence utilisée par ce point d'accès ; et
- $\alpha$ et $\beta$ sont des constantes.

**13.** Un système d'appairage d'un terminal à un point d'accès d'un réseau de communication sans fil, ledit réseau comprenant une pluralité de points d'accès coordonnés de manière centralisée par un dispositif gestionnaire, ledit système comprenant:

- des moyens, dans au moins un point d'accès, pour recevoir un premier message comprenant une information indiquant que ledit terminal souhaite s'appairer audit point d'accès;
- des moyens, dans ledit point d'accès, pour envoyer un second message audit dispositif gestionnaire, ledit second message comprenant une information indiquant que ledit terminal souhaite s'appairer audit point d'accès;
- des moyens, dans ledit dispositif gestionnaire, pour recevoir ledit second message;
- des moyens de détermination, dans ledit dispositif gestionnaire, pour déterminer une valeur pour chacun desdits points d'accès auxquels ledit terminal souhaite s'appairer, ladite valeur pour un point d'accès donné étant représentative de la capacité dudit point d'accès de mener à terme l'appairage dudit terminal ;
- des moyens, dans ledit dispositif gestionnaire, pour sélectionner le point d'accès ayant une valeur optimale ;
- des moyens, dans ledit dispositif gestionnaire, pour envoyer un troisième message audit point d'accès sélectionné lui indiquant d'engager une session d'appairage avec ledit terminal et un message d'arrêt aux points d'accès non sélectionnés ;
- des moyens, dans ledit point d'accès sélectionné, pour ajouter dans au moins une trame de balise une information indiquant qu'une session d'appairage est active, ladite information étant ajoutée uniquement à réception par ledit point d'accès dudit troisième message ; et
- des moyens d'appairage dudit point d'accès et dudit terminal ;

ledit système étant **caractérisé en ce que** lesdits moyens de détermination, dans ledit dispositif gestionnaire, sont configurés pour déterminer ladite valeur pour un point d'accès donné en fonction du retard de la première demande d'appairage détectée par ledit point d'accès par rapport à la première demande d'appairage détectée sur l'ensemble desdits points d'accès.

**14.** Le système selon la revendication 13, dans lequel lesdits moyens de détermination sont configurés pour déterminer une combinaison du retard de la première demande d'appairage détectée par ledit point d'accès par rapport à la première demande d'appairage détectée sur l'ensemble desdits points d'accès et d'au moins une des valeurs suivantes :

a) un nombre $N_i$ de demandes d'appairage détectées par ledit point d'accès pour ledit terminal ou un taux d'occupation dudit point d'accès;
b) une moyenne $RSSI_i$ des indications de puissance de signal reçu des requêtes de sonde contenant lesdites demandes d'appairage détectées ;

ladite valeur pour un point d'accès donné étant égale à ladite combinaison.

**15.** Le système selon la revendication 14, dans lequel ladite valeur pour un point d'accès donné d'index i est égale à :

$(T_i - \min_{\forall k \in [0;K]} T_k)/500\text{-}RSSI_i\text{-}N_i$ où Ti est une date de détection d'une première demande d'appairage et

$\min_{\forall k \in [0;K]} T_k$ est la valeur la plus petite des $T_k$ sur l'ensemble des points d'accès.

**16.** Le système selon la revendication 14, dans lequel ladite valeur pour un point d'accès donné d'index i est égale à :

$$S_i = \alpha * (T_i - \min_{\forall k \in [0;K]} T_k) + \beta * RSSI_i + \tau_i + B_i$$

où :

- $\tau_i$ est le taux d'occupation du point d'accès d'indice i ;
- Ti est une date de détection d'une première demande d'appairage ;
- $\min_{\forall k \in [0;K]} T_k$ est la valeur la plus petite des $T_k$ sur l'ensemble des points d'accès ;

- $B_i$ est une valeur bonus spécifique au point d'accès d'indice i qui dépend de la bande de fréquence utilisée par ce point d'accès ; et
- $\alpha$ et $\beta$ sont des constantes.

17. Un programme d'ordinateur **caractérisé en ce qu'**il comprend des instructions pour mettre en oeuvre, par un dispositif, le procédé selon l'une des revendications 1 à 8, lorsque ledit programme est exécuté par une unité de calcul dudit dispositif.

18. Un support d'enregistrement sur lequel est stocké un programme d'ordinateur comprenant des instructions pour mettre en oeuvre, par un dispositif, le procédé selon l'une des revendications 1 à 8, lorsque ledit programme est exécuté par une unité de calcul dudit dispositif.

**Patentansprüche**

1. Verfahren zur paarweisen Verbindung eines Endgeräts mit einem Zugangspunkt eines drahtlosen Kommunikationsnetzes, wobei das Netz eine Vielzahl von von einer Verwaltungsvorrichtung zentral koordinierten Zugangspunkten enthält, wobei das Verfahren die folgenden Schritte enthält, die von der Verwaltungsvorrichtung ausgeführt werden:

   - Empfang (G112) einer Nachricht von mindestens einem Zugangspunkt der Vielzahl von Zugangspunkten, die eine Information enthält, die darauf hinweist, dass das Endgerät sich mit dem Zugangspunkt paarweise verbinden möchte;
   - Bestimmen (G114) eines Werts für jeden der Zugangspunkte, mit denen das Endgerät sich paarweise verbinden möchte, wobei der Wert für einen gegebenen Zugangspunkt für die Fähigkeit des Zugangspunkts repräsentativ ist, die paarweise Verbindung des Endgeräts zum Abschluss zu bringen;
   - Auswahl (G114) des Zugangspunkts, der einen optimalen Wert hat;
   - Senden (G116) einer Nachricht an den ausgewählten Zugangspunkt, die darauf hinweist, eine Sitzung zur paarweisen Verbindung mit dem Endgerät einzuleiten, und einer Stoppnachricht an die nicht ausgewählten Zugangspunkte,

   wobei das Verfahren **dadurch gekennzeichnet ist, dass** der Wert für einen gegebenen Zugangspunkt von der Verzögerung des vom Zugangspunkt erkannten ersten Antrags zur paarweisen Verbindung bezüglich des in der Gesamtheit der Zugangspunkte erkannten ersten Antrags zur paarweisen Verbindung abhängt.

2. Verfahren nach Anspruch 1, wobei der Wert für einen gegebenen Zugangspunkt gleich einer Kombination der Verzögerung des vom Zugangspunkt erkannten ersten Antrags zur paarweisen Verbindung bezüglich des in der Gesamtheit der Zugangspunkte erkannten ersten Antrags zur paarweisen Verbindung und mindestens eines der folgenden Werte ist:

   a) eine Anzahl $N_i$ von vom Zugangspunkt für das Endgerät erkannten Anträgen zur paarweisen Verbindung oder eine Belegungsrate des Zugangspunkts;
   b) ein Mittelwert $RSSI_i$ der Leistungsanzeigen eines empfangenen Signals der die erkannten Anträge zur paarweisen Verbindung enthaltenden Sondenanforderungen.

3. Verfahren nach Anspruch 2, wobei der Wert für einen gegebenen Zugangspunkt mit dem Index i gleich:

$$\left( T_i - \min_{\forall \in [0;k]} T_k \right) / 500 - RSSI_i - N_i$$

ist, wobei $T_i$ ein Erkennungsdatum einer ersten Antrags zur paarweisen Verbindung und $\min_{\forall k \in [0;K]} T_k$ der kleinste Wert der $T_k$ in der Gesamtheit der Zugangspunkte ist.

4. Verfahren nach Anspruch 2, wobei der Wert für einen gegebenen Zugangspunkt mit dem Index i gleich:

$$S_i = a * \left( T_i - \min_{\forall \in [0;k]} T_k \right) + \beta * RSSI_i + \tau_i + B_i$$

ist,
wobei:

- $\tau_i$ die Belegungsrate des Zugangspunkts mit dem Index i ist;
- $T_i$ ein Erkennungsdatum einer ersten Antrags zur paarweisen Verbindung ist;
- $\min\limits_{\forall \in [0;k]} T_k$ der kleinste Wert der $T_k$ in der Gesamtheit der Zugangspunkte ist;
- $B_i$ ein für den Zugangspunkt mit dem Index i spezifischer Bonuswert ist, der von dem von diesem Zugangspunkt verwendeten Frequenzband abhängt; und
- $\alpha$ und $\beta$ Konstanten sind.

5. Verfahren zur paarweisen Verbindung eines Endgeräts mit einem Zugangspunkt eines drahtlosen Kommunikationsnetzes, wobei das Netz eine Vielzahl von von einer Verwaltungsvorrichtung zentral koordinierten Zugangspunkten enthält, wobei das Verfahren die folgenden Schritte enthält:

- Empfang (E112) einer ersten Nachricht von mindestens einem Zugangspunkt, die eine Information enthält, die darauf hinweist, dass das Endgerät sich mit dem Zugangspunkt paarweise verbinden möchte;
- Senden (E114) einer zweiten Nachricht vom Zugangspunkt an die Verwaltungsvorrichtung, wobei die zweite Nachricht eine Information enthält, die darauf hinweist, dass das Endgerät sich mit dem Zugangspunkt paarweise verbinden möchte;
- Empfang (G112) der zweiten Nachricht durch die Verwaltungsvorrichtung;
- Bestimmung (G114) eines Werts für jeden der Zugangspunkte, mit denen das Endgerät sich paarweise verbinden möchte, wobei der Wert für einen gegebenen Zugangspunkt für die Fähigkeit des Zugangspunkts repräsentativ ist, die paarweise Verbindung des Endgeräts zum Abschluss zu bringen; und
- Auswahl (G114) des Zugangspunkts, der einen optimalen Wert hat;
- Senden (G116) einer dritten Nachricht an den ausgewählten Zugangspunkt, die ihn darauf hinweist, eine Sitzung zur paarweisen Verbindung mit dem Endgerät einzuleiten, und einer Stoppnachricht an die nicht ausgewählten Zugangspunkte;
- Hinzufügung (E116) in mindestens einen Beacon-Frame des ausgewählten Zugangspunkts einer Information, die darauf hinweist, dass eine Sitzung zur paarweisen Verbindung aktiv ist, nur bei Empfang der dritten Nachricht durch den Zugangspunkt; und
- paarweise Verbindung (E118) des Zugangspunkts und des Endgeräts,

wobei das Verfahren **dadurch gekennzeichnet ist, dass** der Wert für einen gegebenen Zugangspunkt von der Verzögerung des vom Zugangspunkt erkannten ersten Antrags zur paarweisen Verbindung bezüglich des in der Gesamtheit der Zugangspunkte erkannten ersten Antrags zur paarweisen Verbindung abhängt.

6. Verfahren nach Anspruch 5, wobei der Wert für einen gegebenen Zugangspunkt gleich einer Kombination der Verzögerung des vom Zugangspunkt erkannten ersten Antrags zur paarweisen Verbindung bezüglich des in der Gesamtheit der Zugangspunkte erkannten ersten Antrags zur paarweisen Verbindung und mindestens eines der folgenden Werte ist:

a) eine Anzahl $N_i$ von vom Zugangspunkt für das Endgerät erkannten Anträgen zur paarweisen Verbindung oder eine Belegungsrate des Zugangspunkts;
b) ein Mittelwert $RSSI_i$ der Leistungsanzeigen eines empfangenen Signals der die erkannten Anträge zur paarweisen Verbindung enthaltenden Sondenanforderungen.

7. Verfahren nach Anspruch 6, wobei der Wert für einen gegebenen Zugangspunkt mit dem Index i gleich:

$$\left(T_i - \min\limits_{\forall \in [0;k]} T_k\right)/500 - RSSI_i - N_i$$

ist, wobei $T_i$ ein Erkennungsdatum einer ersten Antrags zur paarweisen Verbindung und $\min\limits_{\forall k \in [0;K]} T_k$ der kleinste Wert der $T_k$ in der Gesamtheit der Zugangspunkte ist.

8. Verfahren nach Anspruch 6, wobei der Wert für einen gegebenen Zugangspunkt mit dem Index i gleich:

$$S_i = a * \left( T_i - \min_{\forall \in [0;k]} T_k \right) + \beta * RSSII_i + \tau_i + B_i$$

ist,
wobei:

- $\tau_i$ die Belegungsrate des Zugangspunkts mit dem Index i ist;
- $T_i$ ein Erkennungsdatum einer ersten Antrags zur paarweisen Verbindung ist;
- $\min\limits_{\forall \in [0;k]} T_k$ der kleinste Wert der $T_k$ in der Gesamtheit der Zugangspunkte ist;
- $B_i$ ein für den Zugangspunkt mit dem Index i spezifischer Bonuswert ist, der von dem von diesem Zugangspunkt verwendeten Frequenzband abhängt; und
- $\alpha$ und $\beta$ Konstanten sind.

9. Verwaltungsvorrichtung, konfiguriert für die paarweise Verbindung eines Endgeräts mit einem Zugangspunkt eines drahtlosen Kommunikationsnetzes, wobei das Netz eine Vielzahl von von der Verwaltungsvorrichtung zentral koordinierten Zugangspunkten enthält, wobei die Verwaltungsvorrichtung enthält:

- Einrichtungen zum Empfang einer Nachricht von mindestens einem Zugangspunkt der Vielzahl von Zugangspunkten, die eine Information enthält, die darauf hinweist, dass das Endgerät sich mit dem Zugangspunkt paarweise verbinden möchte;
- Bestimmungseinrichtungen, um einen Wert für jeden der Zugangspunkte zu bestimmen, mit denen das Endgerät sich paarweise verbinden möchte, wobei der Wert für einen gegebenen Zugangspunkt für die Fähigkeit des Zugangspunkts repräsentativ ist, die paarweise Verbindung des Endgeräts zum Abschluss zu bringen;
- Einrichtungen zur Auswahl des Zugangspunkts, der einen optimalen Wert hat; und
- Einrichtungen zum Senden einer Nachricht an den ausgewählten Zugangspunkt, die darauf hinweist, eine Sitzung zur paarweisen Verbindung mit dem Endgerät einzuleiten, und einer Stoppnachricht an die nicht ausgewählten Zugangspunkte,

wobei die Vorrichtung **dadurch gekennzeichnet ist, dass** die Bestimmungseinrichtungen konfiguriert sind, den Wert für einen gegebenen Zugangspunkt abhängig von der Verzögerung des vom Zugangspunkt erkannten ersten Antrags zur paarweisen Verbindung bezüglich des in der Gesamtheit der Zugangspunkte erkannten ersten Antrags zur paarweisen Verbindung zu bestimmen.

10. Vorrichtung nach Anspruch 9, wobei die Bestimmungseinrichtungen konfiguriert sind, eine Kombination der Verzögerung des vom Zugangspunkt erkannten ersten Antrags zur paarweisen Verbindung bezüglich des in der Gesamtheit der Zugangspunkte erkannten ersten Antrags zur paarweisen Verbindung und mindestens eines der folgenden Werte zu bestimmen:

a) eine Anzahl $N_i$ von vom Zugangspunkt für das Endgerät erkannten Anträgen zur paarweisen Verbindungen oder eine Belegungsrate des Zugangspunkts;
b) ein Mittelwert $RSSI_i$ der Leistungsanzeigen eines empfangenen Signals der die erkannten Anträge zur paarweisen Verbindung enthaltenden Sondenanforderungen;

wobei der Wert für einen gegebenen Zugangspunkt gleich der Kombination ist.

11. Vorrichtung nach Anspruch 10, wobei wobei der Wert für einen gegebenen Zugangspunkt mit dem Index i gleich:

$$\left( T_i - \min_{\forall \in [0;k]} T_k \right) / 500 - RSSI_i - N_i$$

ist, wobei $N_i$ ein Erkennungsdatum eines ersten Antrags zur paarwei- sen Verbindung und $\min\limits_{\forall k \in [0;K]} T_k$ der kleinste Wert der $T_k$ in der Gesamtheit der Zugangspunkte ist.

12. Vorrichtung nach Anspruch 10, wobei der Wert für einen gegebenen Zugangspunkt mit dem Index i gleich:

$$S_i = a * \left( T_i - \min_{\forall \in [0;k]} T_k \right) + \beta * RSSI_i + \tau_i + B_i$$

ist,
wobei:

- $\tau_i$ die Belegungsrate des Zugangspunkts mit dem Index i ist;
- $T_i$ ein Erkennungsdatum einer ersten Antrags zur paarweisen Verbindung ist;
- $\min_{\forall \in [0;k]} T_k$ der kleinste Wert der $T_k$ in der Gesamtheit der Zugangspunkte ist;
- $B_i$ ein für den Zugangspunkt mit dem Index i spezifischer Bonuswert ist, der von dem von diesem Zugangspunkt verwendeten Frequenzband abhängt; und
- $\alpha$ und $\beta$ Konstanten sind.

13. System zur paarweisen Verbindung eines Endgeräts mit einem Zugangspunkt eines drahtlosen Kommunikationsnetzes, wobei das Netz eine Vielzahl von von einer Verwaltungsvorrichtung zentral koordinierten Zugangspunkten enthält, wobei das System enthält:

- Einrichtungen, in mindestens einem Zugangspunkt, um eine erste Nachricht zu empfangen, die eine Information enthält, die darauf hinweist, dass das Endgerät sich mit dem Zugangspunkt paarweise verbinden möchte;
- Einrichtungen, in dem Zugangspunkt, um eine zweite Nachricht an die Verwaltungsvorrichtung zu senden, wobei die zweite Nachricht eine Information enthält, die darauf hinweist, dass das Endgerät sich mit dem Zugangspunkt paarweise verbinden möchte;
- Einrichtungen, in der Verwaltungsvorrichtung, um die zweite Nachricht zu empfangen;
- Bestimmungseinrichtungen, in der Verwaltungsvorrichtung, um einen Wert für jeden der Zugangspunkte zu bestimmen, mit denen das Endgerät sich paarweise verbinden möchte, wobei der Wert für einen gegebenen Zugangspunkt für die Fähigkeit des Zugangspunkts repräsentativ ist, die paarweise Verbindung des Endgerät zum Abschluss zu bringen;
- Einrichtungen, in der Verwaltungsvorrichtung, um den Zugangspunkt auszuwählen, der einen optimalen Wert hat;
- Einrichtungen, in der Verwaltungsvorrichtung, um eine dritte Nachricht an den ausgewählten Zugangspunkt, die ihn darauf hinweist, eine Sitzung zur paarweisen Verbindung mit dem Endgerät einzuleiten, und eine Stoppnachricht an die nicht ausgewählten Zugangspunkte zu senden;
- Einrichtungen, im ausgewählten Zugangspunkt, um in mindestens einen Beacon-Frame eine Information hinzuzufügen, die darauf hinweist, dass eine Sitzung zur paarweisen Verbindung aktiv ist, wobei die Information nur bei Empfang der dritten Nachricht durch den Zugangspunkt hinzugefügt wird; und
- Einrichtungen zur paarweisen Verbindung des Zugangspunkts und des Endgeräts;

wobei das System **dadurch gekennzeichnet ist, dass** die Bestimmungseinrichtungen, in der Verwaltungsvorrichtung, konfiguriert sind, den Wert für einen gegebenen Zugangspunkt abhängig von der Verzögerung des vom Zugangspunkt erkannten ersten Antrags zur paarweisen Verbindung bezüglich des in der Gesamtheit der Zugangspunkte erkannten ersten Antrags zur paarweisen Verbindung zu bestimmen.

14. System nach Anspruch 13, wobei die Bestimmungseinrichtungen konfiguriert sind, eine Kombination der Verzögerung des vom Zugangspunkt erkannten ersten Antrags zur paarweisen Verbindung bezüglich des in der Gesamtheit der Zugangspunkte erkannten ersten Antrags zur paarweisen Verbindung und mindestens eines der folgenden Werte zu bestimmen:

a) eine Anzahl $N_i$ von vom Zugangspunkt für das Endgerät erkannten Anträgen zur paarweisen Verbindung oder eine Belegungsrate des Zugangspunkts;
b) ein Mittelwert $RSSI_i$ der Leistungsanzeigen eines empfangenen Signals der die erkannten Anträge zur paarweisen Verbindung enthaltenden Sondenanforderungen;

wobei der Wert für einen gegebenen Zugangspunkt gleich der Kombination ist.

15. System nach Anspruch 14, wobei der Wert für einen gegebenen Zugangspunkt mit dem Index i gleich:

$$\left(T_i - \min_{\forall \in [0;k]} T_k\right)/500 - RSSI_i - N_i$$ ist, wobei T$_i$ ein Erkennungsdatum einer ersten Antrags zur paarweisen Verbindung und $\min_{\forall k \in [0;K]} T_k$ der kleinste Wert der T$_k$ in der Gesamtheit der Zugangspunkte ist.

16. System nach Anspruch 14, wobei der Wert für einen gegebenen Zugangspunkt mit dem Index i gleich:

$$S_i = a * \left(T_i - \min_{\forall \in [0;k]} T_k\right) + \beta * RSSI_i + \tau_i + B_i$$

ist,
wobei:

- $\tau_i$ die Belegungsrate des Zugangspunkts mit dem Index i ist;
- T$_i$ ein Erkennungsdatum eines ersten Antrags zur paarweisen Verbindung ist;
- $\min_{\forall \in [0;k]} T_k$ der kleinste Wert der T$_k$ in der Gesamtheit der Zugangspunkte ist;
- B$_i$ ein für den Zugangspunkt mit dem Index i spezifischer Bonuswert ist, der von dem von diesem Zugangspunkt verwendeten Frequenzband abhängt; und
- $\alpha$ und $\beta$ Konstanten sind.

17. Computerprogramm, **dadurch gekennzeichnet, dass** es Anweisungen zur Durchführung des Verfahrens nach einem der Ansprüche 1 bis 8 durch eine Vorrichtung enthält, wenn das Programm von einer Recheneinheit der Vorrichtung ausgeführt wird.

18. Aufzeichnungsträger, auf dem ein Computerprogramm gespeichert ist, das Anweisungen zur Durchführung des Verfahrens nach einem der Ansprüche 1 bis 8 durch eine Vorrichtung enthält, wenn das Programm von einer Recheneinheit der Vorrichtung ausgeführt wird.

**Claims**

1. A method for pairing a terminal with an access point in a wireless communication network, said network comprising a plurality of access points that are centrally coordinated by a manager device, said method comprising the following steps executed by said manager device:

   - receiving (G112) a message from at least one access point of said plurality of access points comprising information indicating that said terminal wishes to pair with said access point;
   - determining (G114) a value for each of said access points with which said terminal wishes to pair, said value for a given access point being representative of the capability of said access point to complete the pairing of said terminal;
   - selecting (G114) the access point having an optimal value;

      - sending (G116) a message to said selected access point indicating to initiate a pairing session with said terminal and a stop message to unselected access points,

   said method being **characterized in that** said value for a given access point is a function of the delay of the first pairing request detected by said access point with respect to the first pairing request detected over all of said access points.

2. The method as claimed in claim 1, wherein said value for a given access point is equal to a combination of the delay of the first pairing request detected by said access point with respect to the first pairing request detected over all of said access points and at least one of the following values:

   a) a number Ni of pairing requests detected by said access point for said terminal or an occupancy rate of said access point;
b) an average $RSSI_i$ of the signal strength indications received from probe requests containing said detected pairing requests.

**3.** The method as claimed in claim 2, wherein said value for a given access point of index i is equal to:

$$(T_i - \min_{\forall k \in [0;K]} T_k)/500\text{-}RSSI_i\text{-}N_i$$ where Ti is a date of detection of a first pairing request and $\min_{\forall k \in [0;K]} T_k$ is the smallest value of $T_k$ over all of the access points.

**4.** The method as claimed in claim 2, wherein said value for a given access point of index i is equal to:

$$S_i = \alpha * (T_i - \min_{\forall k \in [0;K]} T_k) + \beta * RSSI_i + \tau_i + B_i$$

where:

- $\tau_i$ is the occupancy rate of the access point of index i;
- $T_i$ is a date of detection of a the first pairing request;
- $\min_{\forall k \in [0;K]} T_k$ is the smallest value of $T_k$ over all of the access points;
- $B_i$ is a bonus value specific to the access point of index i which depends on the frequency band used by that access point; and
- $\alpha$ and $\beta$ are constants.

**5.** A method for pairing a terminal with an access point in a wireless communication network, said network comprising a plurality of access points that are centrally coordinated by a manager device, said method comprising the following steps:

- receiving (E112), by at least one access point, a first message comprising information indicating that said terminal wishes to pair with said access point;
- sending (E114), by said access point, a second message to said manager device, said second message comprising information indicating that said terminal wishes to pair with said access point;
- receiving (G112), by the manager device, said second message;
- determining (G114) a value for each of said access points with which said terminal wishes to pair, said value for a given access point being representative of the capability of said access point to complete the pairing of said terminal; and
- selecting (G114) the access point having an optimal value;
- sending (G116) a third message to said selected access point indicating thereto to initiate a pairing session with said terminal and a stop message to unselected access points;
- adding (E116), in at least one beacon frame of said selected access point, information indicating that a pairing session is active, only on receipt of said third message by said access point; and
- pairing (E118) said access point and said terminal,

said method being **characterized in that** said value for a given access point is a function of the delay of the first pairing request detected by said access point with respect to the first pairing request detected over all of said access points.

**6.** The method as claimed in claim 5, wherein said value for a given access point is equal to a combination of the delay of the first pairing request detected by said access point with respect to the first pairing request detected over all of said access points and at least one of the following values:

a) a number Ni of pairing requests detected by said access point for said terminal or an occupancy rate of said access point;
b) an average $RSSI_i$ of the signal strength indications received from the probe requests containing said detected pairing requests.

**7.** The method as claimed in claim 6, wherein said value for a given access point of index i is equal to: :

$$(T_i - \min_{\forall k \in [0;K]} T_k)/500\text{-RSSI}_i\text{-N}_i$$ where Ti is a date of detection of a first pairing request and $\min_{\forall k \in [0;K]} T_k$ is the smallest value of $T_k$ over all of the access points.

**8.** The method as claimed in claim 6, wherein said value for a given access point of index i is equal to:

$$S_i = \alpha * (T_i - \min_{\forall k \in [0;K]} T_k) + \beta * RSSI_i + \tau_i + B_i$$

where:

- $\tau_i$ is the occupancy rate of the access point of index i;
- $\min_{\forall k \in [0;K]} T_k$ is the smallest value of $T_k$ over all of the access points;
- $B_i$ is a bonus value specific to the access point of index i which depends on the frequency band used by that access point; and
- $\alpha$ and $\beta$ are constants.

**9.** A manager device configured for pairing a terminal with an access point in a wireless communication network, said network comprising a plurality of access points that are centrally coordinated by said manager device, said manager device comprising:

- means for receiving a message from at least one access point of said plurality of access points comprising information indicating that said terminal wishes to pair with said access point;
- determining means for determining a value for each of said access points with which said terminal wishes to pair, said value for a given access point being representative of the capability of said access point to complete the pairing of said terminal;
- means for selecting the access point having an optimal value; and
- means for sending a message to said selected access point indicating to initiate a pairing session with said terminal and a stop message to unselected access points,

said device being **characterized in that** said determining means are configured to determine said value for a given access point as a function of the delay of the first pairing request detected by said access point with respect to the first pairing request detected over all of said access points.

**10.** The device as claimed in claim 9, wherein said determining means are configured to determine a combination of the delay of the first pairing request detected by said access point with respect to the first pairing request detected over all of said access points and at least one of the following values:

a) a number Ni of pairing requests detected by said access point for said terminal or an occupancy rate of said access point;
b) an average $RSSI_i$ of the signal strength indications received from the probe requests containing said detected pairing requests;

said value for a given access point being equal to said combination.

**11.** The device as claimed in claim 10, wherein said value for a given access point of index i is equal to: :

$$(T_i - \min_{\forall k \in [0;K]} T_k)/500\text{-RSSI}_i\text{-N}_i$$ where Ti is a date of detection of a first pairing request and $\min_{\forall k \in [0;K]} T_k$ is the smallest value of $T_k$ over all of the access points.

**12.** The device as claimed in claim 10, wherein said value for a given access point of index i is equal to:

$$S_i = \alpha * (T_i - \min_{\forall k \in [0;K]} T_k) + \beta * RSSI_i + \tau_i + B_i$$

where:

- $\tau_i$ is the occupancy rate of the access point of index i;
- $T_i$ is a date of detection of the first pairing request;
- $\min\limits_{\forall k \in [0;K]} T_k$ is the smallest value of $T_k$ over all of the access points;
- $B_i$ is a bonus value specific to the access point of index i which depends on the frequency band used by that access point; and
- $\alpha$ and $\beta$ are constants.

13. A system for pairing a terminal with an access point in a wireless communication network, said network comprising a plurality of access points that are centrally coordinated by a manager device, said system comprising:

- means, in at least one access point, for receiving a first message comprising information indicating that said terminal wishes to pair with said access point;
- means, in said access point, for sending a second message to said manager device, said second message comprising information indicating that said terminal wishes to pair with said access point;
- means, in said manager device, for receiving said second message;
- determining means, in said manager device, for determining a value for each of said access points with which said terminal wishes to pair, said value for a given access point being representative of the capability of said access point to complete the pairing of said terminal;
- means, in said manager device, for selecting the access point having an optimal value;
- means, in said manager device, for sending a third message to said selected access point indicating thereto to initiate a pairing session with said terminal and a stop message to unselected access points;
- means, in said selected access point, for adding, in at least one beacon frame, information indicating that a pairing session is active, said information being added only on receipt of said third message by said access point; and
- means for pairing said access point and said terminal;

said system being **characterized in that** said determining means, in said manager device, are configured to determine said value for a given access point as a function of the delay of the first pairing request detected by said access point with respect to the first pairing request detected over all of said access points.

14. The system as claimed in claim 13, wherein said determining means are configured to determine a combination of the delay of the first pairing request detected by said access point with respect to the first pairing request detected over all of said access points and at least one of the following values:

a) a number Ni of pairing requests detected by said access point for said terminal or an occupancy rate of said access point;
b) an average RSSI$_i$ of the signal strength indications received from the probe requests containing said detected pairing requests;

said value for a given access point being equal to said combination.

15. The device as claimed in claim 14, wherein said value for a given access point of index i is equal to: :
$(T_i - \min\limits_{\forall k \in [0;K]} T_k)/500\text{-RSSI}_i\text{-N}_i$ where Ti is a date of detection of a first pairing request and $\min\limits_{\forall k \in [0;K]} T_k$ is the smallest value of $T_k$ over all of the access points.

16. The device as claimed in claim 14, wherein said value for a given access point of index i is equal to:

$$S_i = \alpha * (T_i - \min\limits_{\forall k \in [0;K]} T_k) + \beta * RSSI_i + \tau_i + B_i$$

where:

- $\tau_i$ is the occupancy rate of the access point of index i;

- $T_i$ is a date of detection of the first pairing request

- $\min\limits_{\forall k \in [0;K]} T_k$ is the smallest value of $T_k$ over all of the access points;

- $B_i$ is a bonus value specific to the access point of index i which depends on the frequency band used by that access point; and

- $\alpha$ and $\beta$ are constants.

17. A computer program, **characterized in that** it comprises instructions for the implementation, by a device, of the method as claimed in one of claims 1 to 8, when said program is executed by a computing unit of said device.

18. A recording medium on which is stored a computer program comprising instructions for the implementation, by a device, of the method as claimed in one of claims 1 to 8, when said program is executed by a computing unit of said device.

Fig. 1

Fig. 2

G10

Détection déclenchement d'une session WPS distribuée ⟿ G100

Envoi d'un message de démarrage à tous les exécutants ⟿ G110

Réception d'un message de détection d'une demande d'appairage ⟿ G112

Sélection d'un exécutant d'appairage ⟿ G114

Envoi d'un message d'engagement d'appairage à l'exécutant sélectionné et d'un message d'arrêt aux autres ⟿ G116

Réception message indiquant le succès ou l'échec de l'appairage ⟿ G118

## Fig. 4

300

| 301 | 302 | 304 |
|------|------|------|
| PROC | MEM | PSRC |

310

STCK    COM    I/O

306    305    303

## Fig. 3

E10

Réception d'un message de démarrage
E100

Réception d'au moins une requête de sondage émise par un terminal pour appairage
E112

Envoi d'un message de détection d'une demande d'appairage
E114

Réception d'un message d'engagement ? → NON → Arrêt

OUI

Ajout information dans trame de balise indiquant qu'une session d'appairage est active
E116

Appairage avec terminal et envoi d'un message indiquant le succès ou l'échec de l'appairage
E118

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7480264 B

- EP 2791798 A